Europäisches Patentamt

(19) European Patent Office

Office européen des brevets

(11) Publication number: **0 066 454**
**B1**

(12) **EUROPEAN PATENT SPECIFICATION**

(45) Date of publication of patent specification: **09.04.86**

(21) Application number: **82302710.7**

(22) Date of filing: **26.05.82**

(51) Int. Cl.⁴: **F 16 L 1/04, F 03 G 7/04**

(54) Methods of installing submarine cold water conduits.

(30) Priority: **01.06.81 US 268557**

(43) Date of publication of application:
**08.12.82 Bulletin 82/49**

(45) Publication of the grant of the patent:
**09.04.86 Bulletin 86/15**

(84) Designated Contracting States:
**FR GB NL**

(56) References cited:
**GB-A- 280 938**
**GB-A- 904 714**
**GB-A-1 444 037**
**GB-A-1 582 116**
**GB-A-2 011 011**
**US-A-1 647 448**

(73) Proprietor: **MCDERMOTT INCORPORATED**
**P.O. Box 60035 1010 Common Street**
**New Orleans Louisiana 70160 (US)**

(72) Inventor: **Green, William Lawrence**
**528 Valence Street**
**New Orleans Louisiana 70115 (US)**
Inventor: **Harrison, Cary E.**
**Harrison, Gary E.**
**Marrero Louisiana 70072 (US)**
Inventor: **Calkins, Dennis Earl**
**3805 Houma Boulevard No.B-308**
**Metairie Louisiana 70002 (US)**
Inventor: **Wilkins, Jesse R.**
**Route 1, Box 183**
**Picayune Mississippi 39466 (US)**

(74) Representative: **Cotter, Ivan John et al**
**D. YOUNG & CO. 10 Staple Inn**
**London WC1V 7RD (GB)**

Courier Press, Leamington Spa, England.

**Description**

The present invention relates to methods of installing submarine cold water conduits, for instance for use with power plants such as Ocean Thermal Energy Conversion (OTEC) power plants.

The high cost and dwindling supply of easily obtainable fossil fuels has created an intense interest in alternative sources of energy. One such alternative energy source involves utilisation of the temperature differential between warm surface seawater and cooler subsurface seawater. This concept is known as ocean thermal energy conversion or "OTEC".

In the operation of an OTEC power plant, warm surface seawater is used to vapourise a working fluid. The vapour is used to drive turbine generators in much the same way as steam is used to drive turbine generators to produce electricity. After the vapour has passed through the turbines, cool subsurface seawater is used to condense the vapour, thereby completing the working fluid cycle. The cool subsurface seawater required for the process is located roughly 500 to 1000 metres (1500 to 3000 feet) below the water surface, depending on the latitude of the OTEC power plant. In many OTEC power plants, it is necessary to pump large quantities of this cool subsurface seawater to the surface. To accomplish this it is envisioned that a long pipe commonly referred to as a "cold water conduit" will be used, the conduit extending down from the surface to a depth of roughly 500 to 1000 metres (1500 to 3000 feet). It is anticipated that the cold water conduit must be approximately 1.5 to 40 metres (5 to 120 feet) in diameter for OTEC power plants of 1 to 400 MW, respectively.

The need for such a huge conduit presents several severe problems. The conduit must be fabricated, installed, and secured so that it will be able to withstand tremendous dynamic current loads. Other problems involve the method of installing such a large conduit and maintaining its position with respect to an OTEC plant located on the surface.

Prior art techniques for laying pipelines on the ocean floor include methods of installation which encompass the use of a barge and stringer arrangement or the use of an underwater sled which either place the pipeline on or bury it in the ocean floor. In the past, structurally mounted pipelines were either used at shallow depths or were secured to a support structure above the water surface and then the support structure and the pipeline were jointly lowered to the ocean floor. Prior art techniques have been able to lay pipelines measuring 41 cm (16 inches) in diameter to depths of 610 metres (2000 feet), though some pipelines as large as 9.1 metres (30 feet) in diameter have been installed in shallow water. It is believed that the use of a marine railway system to guide a pipeline to these depths and thereafter to support the pipeline on the railway system has heretofore never been attempted. Prior art has not been able to install pipelines at depths necessary for use with an OTEC power plant. These depths were previously inaccessible by prior art means.

UK Patent Specification No. GB 904 714 discloses a method of constructing a submarine conduit or pipeline, formed from respective conduit sections, using a railway track means. The sections are manufactured and joined together at a manufacturing plant adjacent a sea shore and the conduit is conveyed to the water by the railway track means, which is mounted on the land between the plant and the water line.

According to the present invention there is provided a method of installing a submarine conduit, formed from respective conduit sections, using a railway track means, characterised by the steps of:

a) attaching a track pulldown cable to a railway leader, which railway leader includes a sheave through which is reeved a conduit pulldown cable.

b) rigidly fastening the railway leader and successive railway track sections to each other to construct the railway track means while controlling descent of the railway track sections with the track pulldown cable, which cable, extends from the railway leader to the surface and is operated at the water surface to control the descent of the railway track sections,

c) lowering the railway track means onto a sloping underwater land formation,

d) securing the railway track means to the sloping underwater land formation,

e) releasably attaching the reeved conduit pulldown cable to a first section of the conduit, which is a cold water conduit, and operating the reeved conduit pulldown cable from the water surface as a continuous loop cable to bring the first cold water conduit section into position on the railway track means,

f) securing the first cold water conduit section to the railway track means and repositioning the conduit pulldown cable for attaching thereof to another section of the cold water conduit, and

g) repeating steps (e) to (f) for each successive cold water conduit section until all conduit sections are in place.

A method embodying the invention and described hereinbelow involves installing and securing a marine railway system on a floor (more particularly a sloping floor) of a body of water such as an ocean, the system extending from a depth of about 500 to 1000 metres (1500 to 3000 feet) to an OTEC power plant located on a platform in several hundred feet of water, or built on the shoreline. Subsequently, the marine railway system is used for installing and securing a cold water conduit to the floor of the body of water.

An advantage of the method described below is that it can be ued to install a submarine pipeline to 1000 metres (3000 feet) water depths by remote methods and techniques which do not require underwater divers beyond 300 metres (1300 feet) water depths. Yet another such advantage is the reduction of environmental forces, i.e. forces due to wind, current, waves, etc., on the installation operation and maintenance of the system. Another such advantage is that a submarine pipeline can be installed at depths heretofore inaccessible. A further such advantage is the possibility of using larger than ever before coldwater conduits for OTEC power plants.

Further, the embodiment of the invention described below also minimises harm to the marine ecological system since it requires minimal disturbance of the ocean floor. All underwater operations can be monitored by the use of underwater cameras, which minimises the need for underwater personnel. The installation process can proceed from shallow waters thereby reducing environmental forces on the working vessels used and the installation operation. The invention will now be further described, by way of illustrative and non-limiting example, with reference to the accompanying drawings, in which like reference numerals designate like items throughout, and in which:

Figure 1 is an elevational view of a type of underwater land formation with which the invention can be practiced;

Figure 2 is an elevational view of the land formation shown in Figure 1, showing the installation of a bench mark pile;

Figure 3 is an elevational view of the land formation shown in Figure 1, showing the installation of a deadman template;

Figure 4 is an elevational view of the land formation shown in Figure 1, with the deadman template and a track pulldown cable in place;

Figure 5 is an elevational view of the land formation shown in Figure 1, showing a step of attaching a section of a track to a down slope railway leader;

Figure 6 is an elevational view of the land formation shown in Figure 1, showing a step of lowering the track into position;

Figure 7 is an elevational view of the land formation shown in Figure 1, with the track in place and a pile installation rig positioned thereon;

Figure 8 is an elevational view of the land formation shown in Figure 1, showing a step of securing and levelling the track to the land formation;

Figure 9 is an elevational view of the land formation shown in Figure 1, showing a step of lowering a first section of a cold water conduit section onto the track;

Figure 10 is an elevational view of the land formation shown in Figure 1, with the cold water conduit in position;

Figure 11 is an elevational view of the completed cold water conduit of Figure 10 in combination with a discharge pipe and OTEC power plant;

Figure 12 is a side elevation view of the deadman template;

Figure 13 is a top view of the deadman template;

Figure 14 is a side elevational view of the down slope railway leader;

Figure 15 is a top view of the track section;

Figure 16 is an end elevational view of a track section;

Figure 17 is a detailed top view of a track pile guide section;

Figure 18 is a view taken along a line 18—18 in Figure 17;

Figure 19 is a side elevational view of the base of the rail mounted pile installation rig;

Figures 20A and 20B are front and side elevational views of the pile installation rig;

Figure 21 is a side elevational view of a section of the cold water conduit;

Figure 22 is a view taken along a line 22—22 in Figure 21; and

Figures 23 to 26 show an alternative method of positioning the track.

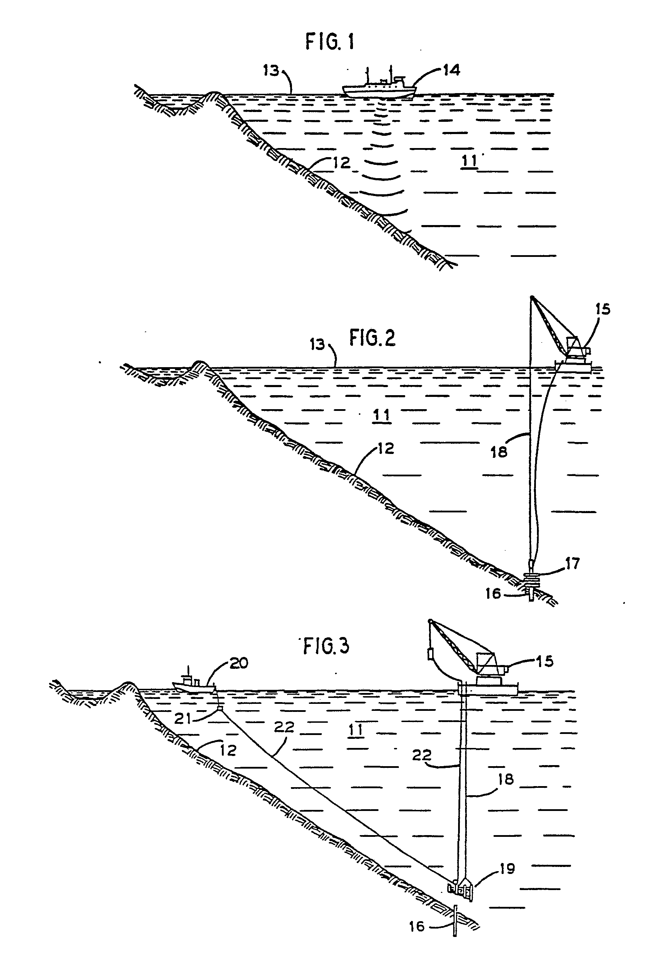

Figure 1 shows a body of water 11 having a downwardly sloping bottom 12 and a surface 13 on which is floating a surveying vessel 14. The vessel 14 is fitted with equipment well known in the art for obtaining accurate geotechncal and mapping data for the purpose of locating the best site along which to install a marine railway system.

Figure 2 shows a derrick barge 15 installing a bench mark pile 16 using a pile driver 17 suspended by a cable 18. Before installation of the bench mark pile 16 in the bottom 12, the chosen path of a track of the marine railway system may be cleared and/or levelled from the shoreline to the bench mark pile 16, in preparation for installing the marine railway system.

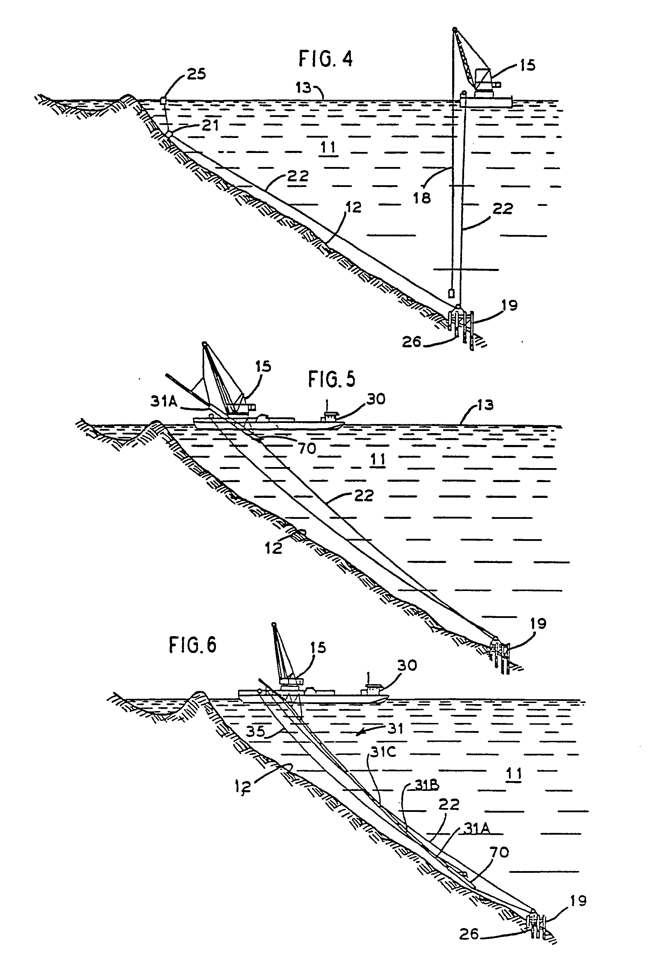

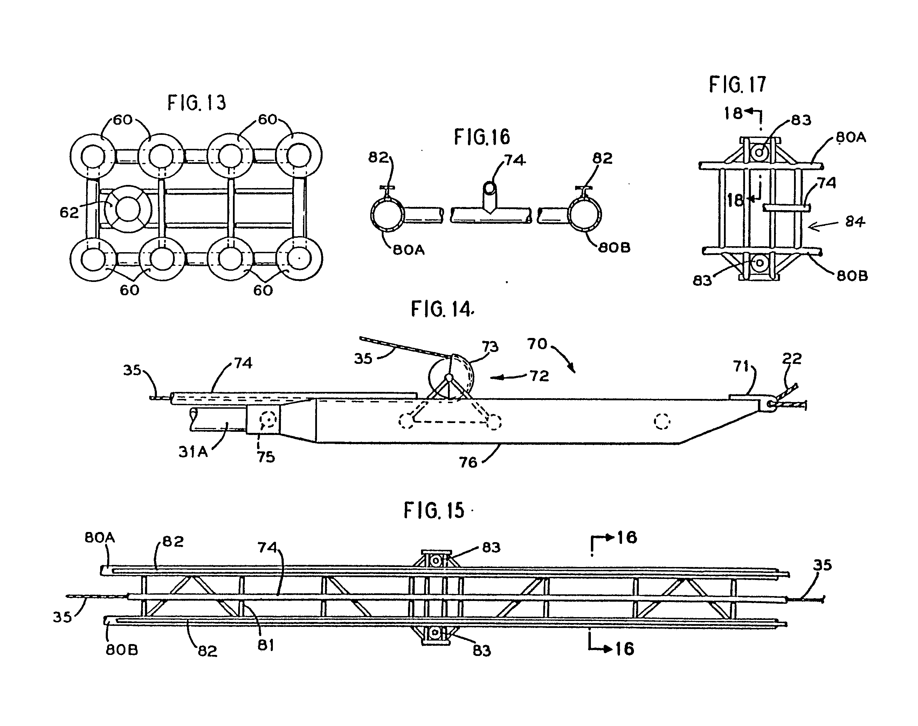

Figures 3 and 4 show the installation of a deadman template 19 atop the bench mark pile 16. The template 19 is installed at approximately the depth to which a cold water conduit is to extend. As shown in Figures 12 and 13, the template 19 has a plurality of pile guides or sleeves 60, one of which (62) is inverted. The inverted pile guide 62 is slid over the bench mark pile 16. A second cable 22 is threaded through a template pulley or sheave 61 (not shown in Figure 13) before the template 19 is lowered into the water 11.

The pulley 61 is attached to the template 19 for the purpose of using it as an aid in the installation of the marine railway system. It allows the derrick barge 15 to anchor and work in shallow water and yet install the railway system to the desired depth. An auxiliary vessel 20 is used to run the cable 22, herein referred to as the track pulldown cable 22, upslope of the template 19. An anchor 21 is attached to the end of the track pulldown cable 22 and a float 25 is attached to the anchor 21 or pulldown cable 22 for retrieval at a later time.

Thereafter, the pile driver 17 installs other template piles 26 needed to secure the template 19 to the sloping bottom 12. Figures 12 and 13 show the template 19 as having a plurality of template pile guides 60 and grout bags 63 attached thereto. Each template pile guide 60 receives a pile 26, driven into place by the pile driver 17. After all the piles 16 and 26 are in place, and the template 19 is levelled, the piles are secured to the template 19 by means well known in the art, preferably by pumping grout into the pile guides 60.

Referring to Figures 5 and 6, a track installation barge or vessel 30 have been coupled to the derrick barge 15 and moved upslope of the template 19. The track installation vessel 30 contains successive track sections which are designated 31A, 31B, 31C, etc. The sections 31A, 31B, 31C, etc., once joined, comprise the track (31) of the marine railway system. The track pulldown cable 22 have been retrieved and a down slope railway leader 70 has been releasably attached to the cable 22. The derrick barge 15 is used to lift and position the railway leader 70 and the first track section 31A so that they may be secured together above the surface 13 of the water.

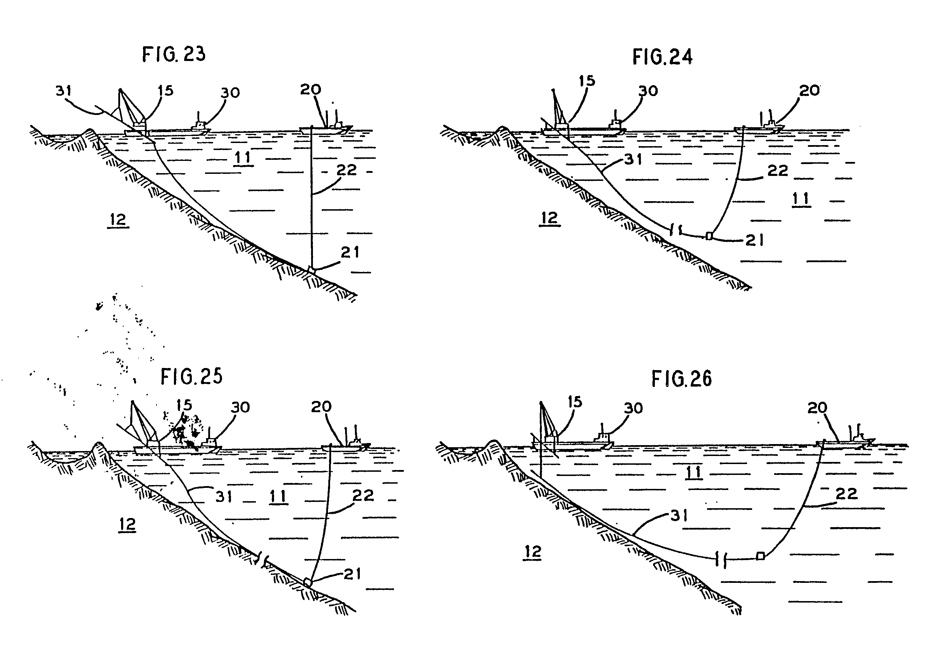

Note that it is not essential to install the template 19. The down slope railway leader 70 can be releasably attached to the cable 22 which in turn is pulled out and away from the work vessels by an auxiliary vessel 20 and thereafter set on the bottom 12. This alternative method is shown in Figures 23 to 26 and is preferred when the path of the track 31 is smooth enough to permit its use.

The railway leader 70 is shown in Figure 14. It includes a cable attachment means 71 to releasably attach the track pulldown cable 22, a pulley or cold water conduit pulldown sheave 72 with a guide 73, a cold water conduit pulldown cable 36 reeved therethrough, a cable conduit 74, track attachment means 75 for securing the leader 70 to the adjacent track section 31A, and a base 76 to which all the above are rigidly attached.

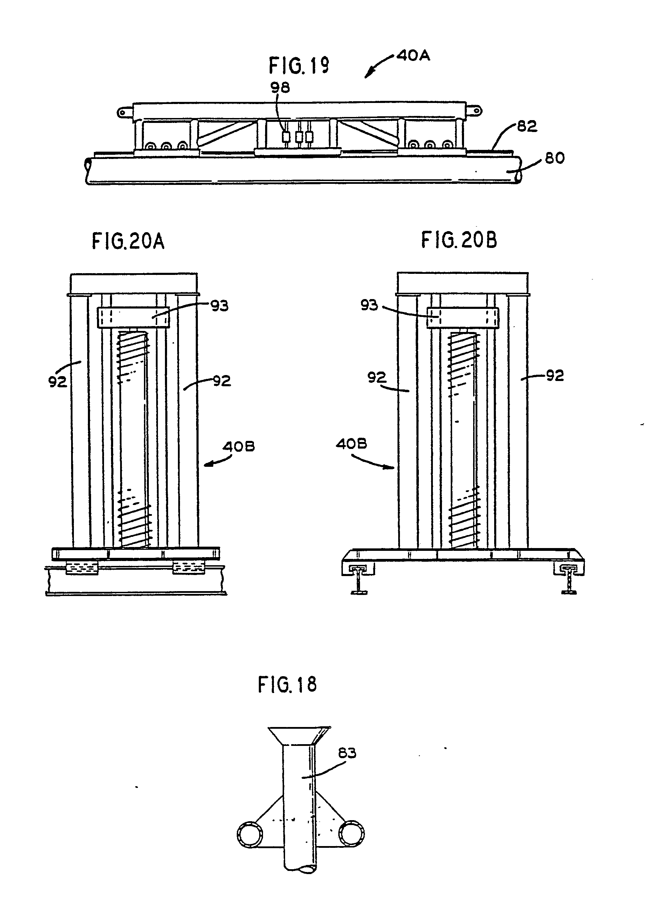

A typical track section 31A is shown in Figures 15 to 18, which show conduits 80A and 80B (or any other similarly shaped body having a length much greater than its width) on each side of the track section 31A, running the length of the section 31A, and defining its width. A plurality of supports 81 rigidly connect the two conduits 80A and 80B. A rail 82 of T-shaped cross-section is rigidly connected along the top of each conduit 80A and 80B, or two parallel rails are provided per track 31. The cable conduit 74 is positioned between the conduits 80A and 80B and runs the length of the track section 31A. Attached to each section 31A, 31B is a track pile guide section 84. Although only one track pile guide section 84 (Figure 17) is shown, it should be understood that any necessary and reasonable number could be used with any one track section 31A, 31B etc. Each track pile guide section 84 is shown to have two track pile guides, sleeves or tubes 83.

The track sections 31A, 31B, 31C, etc. are successively attached as the pulldown cable 22 is used to pull the joined track sections 31A, 31B, 31C, etc. towards the template 19. Those sections 31A, 31B, 31C, etc. already joined define the track 31 and can be flooded or pressurised as required to maintain the desired track attitude to avoid collapse due to the enormous external pressure exerted on closed bodies at great depths. Care must also be taken to feed or pay out the cable 35 while pulling the track 31 with the pulldown cable 22. In the event of bad weather, the assembled track 32 can be set on the bottom 12 until conditions improve. Once the whole track 31 has been tacked together and threaded with the cable 35, the cable 22 is used to pull the track 31 and railway leader 70 towards the template 19. At this point in the installation process the pulldown cable 22 extends from the track installation vessel 30 to the template sheave 61 and one end of the cable 22 is attached to the down slope railway leader 70 at the cable attachment means 71. The cold water conduit pulldown cable 35 extends from the track installation vessel 30 to the cold water pulldown sheave 72 and through the cable conduit 74, and after leaving the upslope end of the cinduit 74 it extends back to one of the barges 15 and 30.

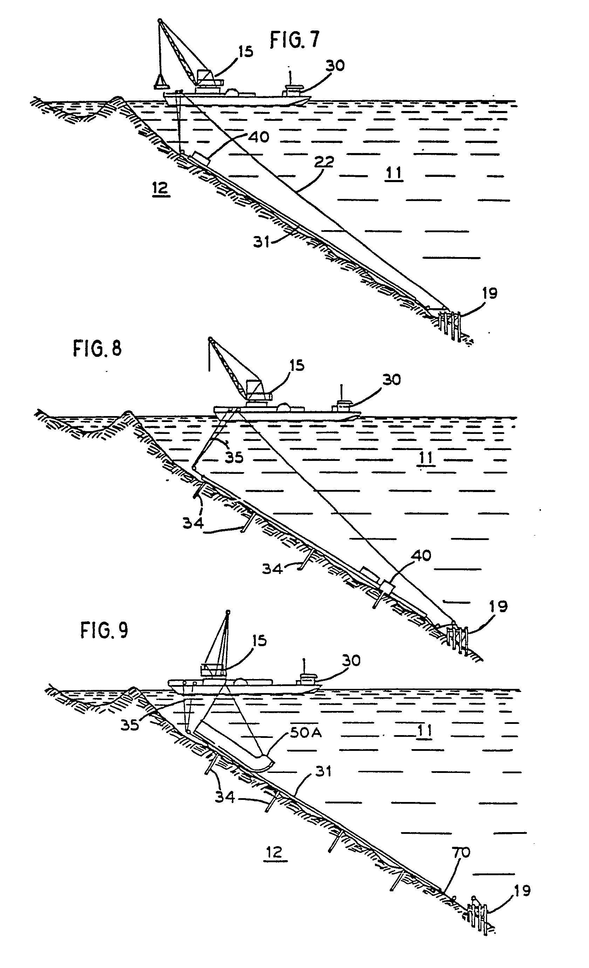

Figures 7 and 8 show a pile installation rig 40 attached to the cable 35 and thereafter lowered onto the track 31 from the derrick barge 15. Figures 19, 20A and 20B show that the pile installation rig 40 is positioned on the track 31 so that it rests on and is slidably engaged by the rails 82. The rig 40 has a base 40A and a guide and reaction member 40B. The base 40A is a dolly-like member that is guided by the rails 82 and on which surface-activated brakes 98, of well-known type, are mounted. The guide and reaction member 40B is attached to the base 40A and is composed of supports 92 and a torque motor 93 used to screw in track piles 34 through the track pile guide tubes or sleeves 83. (However, depending on soil conditions, a hammer (not shown) may be mounted to drive in the piles). Figure 8 shows the pile installation rig 40 proceeding down the railway track 31 installing the track piles 34 to grade. The track 31 is then levelled with jacks (not shown) which are attached to the pile installation rig 40. Thereafter, each pile 34 (shown in Figure 8) is secured to the pile sleeve or guide 83 in a manner well known in the art, preferably with the placement of grout in the guides 83 which secure the track 31 to the bottom 12.

The cold water conduit pulldown cable 35 is used to pull the pile installation rig 40 downslope (i.e. downwardly along the sloping bottom 12) to continue the installation of the track piles 34 until all necessary track piles 34 are installed. Upon completion, the pile installation rig 40 is retrieved by pulling it upslope (i.e. upwardly along the sloping bottom 12) to the upper end of the track 32, releasing it from the track 31, and hoisting it back aboard the barge 15 or 30.

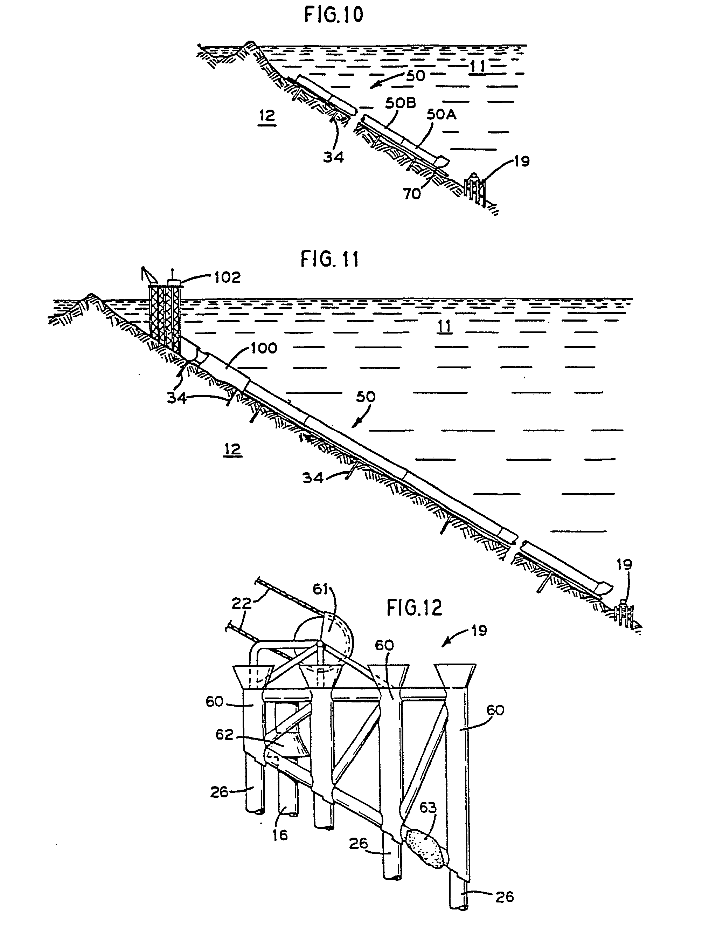

Referring to Figures 9 and 10, the track pulldown cable 22 has been released and pulled back to the derrick barge 15. The track installation barge 30 has been removed and a materials barge containing a first section or inlet 50A of a cold water conduit 50 is brought alongside the derrick barge 15. The first section 50A of the cold water conduit 50 is releasably connected to the cold water conduit pulldown cable 35. The cable 35 is used to pull the conduit sections 50A, 50B, 50C, etc., into place once they have been lowered onto the track 31 and slidably engaged with the rails 82. Mechanical brake means (not shown), which are attached to each of the cold water conduit sections 50A, 50B, 50C, etc., can be engaged from the surface and are used to secure each section of the cold water conduit 50 to the track 31 once in position. The cable 35 is then released from the cold water conduit 50. The brake means could comprise any of the following systems; an explosive pin, a mechanically driven wedge, or the use of chemicals to create a metal to metal bond.

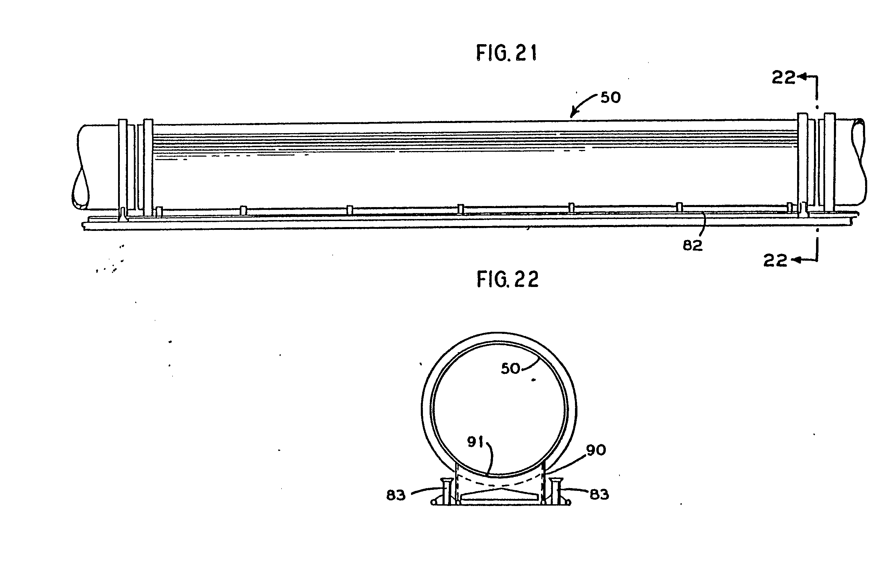

As shown in Figures 21 and 22, each conduit section 50A, 50B, 50C etc., has at least two saddle supports 90. Each saddle suport 90 extends approximately the width of the track 31 and has a concave top side 91 to which are mounted pads (not shown) upon which the cold water conduit 50 rests.

The cable 35 is a continuous loop cable which runs from the derrick barge 15 through the cable conduit 74, through the cold water pulldown sheave 72 and then back to the derrick barge 15. Once the conduit section 50A is pulled into position, it is secured to the track 31, the cable 35 is released from the conduit inlet section 50A and the next conduit section 50B is releasably attached thereto. Each successive conduit section is lowered onto the track 31 and pulled into position by the cold water pulldown cable 35. Figure 11 shows the completed installation of the cold water conduit 50, and also shows a discharge conduit 100 and a shelf-mounted OTEC fossil or nuclear power plant 102 upon which the necessary pumps are located.

**Claims**

1. A method of installing a submarine conduit (50), formed from respective conduit sections (50A etc), using a railway track means (31), characterised by the steps of:

a) attaching a track pulldown cable (22) to a railway leader (70), which railway leader (70) includes a sheave (72) through which is reeved a conduit pulldown cable (35),

b) rigidly fastening the railway leader (70) and successive railway track sections (31A etc) to each other to construct the railway track means (31) while controlling descent of the railway track sections (31A etc) with the track pulldown cable (22), which cable (22) extends from the railway leader (70) to the water surface and is operated at the water surface to control the descent of the railway track sections,

c) lowering the railway track means (31) onto a sloping underwater land formation (12),

d) securing the railway track means (31) to the sloping underwater land formation (12),

e) releasably attaching the reeved conduit pulldown cable (35) to a first section (50A) of the conduit (50), which is a cold water conduit, and operating the reeved conduit pulldown cable (35) from the water surface as a continuous loop cable to bring the first cold water conduit section (50A) into position on the railway track means (31),

f) securing the first cold water conduit section (50A) to the railway track means (31) and repositioning the conduit pulldown cable (35) for attaching thereof to another section of the cold water conduit (50), and

g) repeating steps (e) and (f) for each successive cold water conduit section (50B etc) until all conduit sections are in place.

2. A method according to claim 1, comprising the step of threading each railway track section (31A etc) with the reeved conduit pulldown cable (35) as the railway leader (70) and railway track sections (31A etc) are fastened together.

3. A method according to claim 1 or claim 2, comprising an initial step of lowering and securing to the underwater land formation (12), at a downslope area thereof, a deadman template (19) which includes a pulley (61) reeved with the track pulldown cable.

4. A method according to claim 3, wherein the track pulldown cable (22) and the conduit pulldown cable (35) are operated from a vessel on the surface of the water, the deadman template (19) is installed from a vessel (15) on the surface of the water, and the railway track means (31) is fastened together above water.

5. A method according to claim 3 or claim 4, wherein the step of lowering and securing the deadman template (19) comprises the steps of:

a) installing a bench mark pile (16),

b) placing the deadman template (19) having a plurality of pile guides (60, 62) and the pulley (61) reeved with the track pulldown cable (22) atop the bench mark pile (16) by slidably fitting a pile guide (62) over the bench mark pile (16),

c) installing a pile (26) in each of the pile guides (60),

d) levelling the template (19), and

e) securing the piles (16, 26) to the template (19).

6. A method according to any one of the preceding claims, wherein the track pulldown cable (22) is releasably attached.

7. A method according to any one of the preceding claims, wherein the railway track means (31) is secured to the underwater land formation (12) with track piles (34) using a pile installation rig means (40).

8. A method according to claim 7, wherein the step of securing the railway track means (31) to the underwater land formation (12) with track piles (34) using a pile installation rig means (40) comprises the steps of:

a) installing the piles (34) to extend through a series of pile sheaves (83) attached to the track means (31);

b) levelling the track means (31) with jacks attached to the pile installation rig means (40), and

c) securing the piles (34) to the pile sheaves (83) with securing means.

9. A method according to any one of the preceding claims, wherein the step of lowering the railway track means (31) onto the underwater land formation (12) comprises the step of pressurising or flooding the track means to maintain proper track means attitude.

10. A method according to any one of the preceding claims, wherein each cold water conduit section (50A, 50B etc.) has at least one saddle support (90).

**Patentansprüche**

1. Verfahren zum Einbau einer Unterwasserleitung (50), die aus entsprechenden Leitungsbschnitten (50A usw.) gebildet ist, unter Verwendung einer Schienenwegeinrichtung (31), gekennzeichnet durch folgende Schritte:

a) Anbringen eines Hinunterziehkabels (22) für einen Schienenstrang zu einem Schienenweganschlag (70), der eine Seilscheibe (71) aufweist, über welche ein Hinunterziehkabel (35) für eine Leitung geschoren ist,

b) starres Befestigen des Schienenweganschlages (70) und der folgenden Schienenwegabschnitte (31A usw.) aneinander, um eine Schienenwegeinrichtung (31) aufzubauen, während die Abwärtsbewegung der Schienenwegabschnitte (31A usw.) mit dem Hinunterziehkabel (22) für den Schienenstrang gesteuert wird, wobei sich das Kabel (22) von dem Schienenanschlag (70) zur Wasseroberfläche erstreckt und an der Wasseroberfläche betätigt wird, um die Abwärtsbewegung der Schienenstrangabschnitte zu steuern,

c) Absenken der Schienenstrangeinrichtung (31) auf einen geneigten Unterwasser-Festlandkörper (12),

d) Befestigen der Schienenstrangeinrichtung (31) an dem geneigten Unterwasser-Festlandköper (12),

e) lösbares Anbringen des geschorenen Hinunterziehkabels (35) für die Leitung an einem ersten Abschnitt (50A) der Leitung (50), die eine Kaltwasserleitung ist, und Betätigen des geschorenen Hinunterziehkabels (35) für die Leitung von der Wasseroberfläche wie ein Endlosschleifenkabel, um den ersten Kaltwasserleitungsabschnitt (50A) auf der Schienenstrangeinrichtung (31) in Stellung zu bringen,

f) Befestigen des ersten Kaltwasserleitungsabschnittes (50A) an der Schienenstrangeinrichtung (31) und Wiederinstellungbringen des Hinunterziehkabels (35) für die Leitung, um sie an einem anderen Abschnitt der Kaltwasserleitung (50) anzubringen, und

g) Wiederholen der Schritte e) und f) für jeden folgenden Kaltwasserleitungsabschnitt (50B usw.), bis sich alle Leitungsabschnitte am Platz befinden.

2. Verfahren nach Anspruch 1 mit dem Schritt des Einfädelns bzw. Aufziehens jedes Schienenstrangabschnittes (31A usw.) mit dem geschorenen Hinunterziehkabel (35) für die Leitung, sobald der Schienenanschlag (70) und die Schienenstrangabschnitte (31A usw,) aneinander befestigt sind.

3. Verfahren nach Anspruch 1 oder 2 mit einem anfänglichen Schritt des Absenkens und Befestigens eines Ankerblockmodelles (19) an dem Unterwasserfestlandkörper (12) an einer Schrägfläche desselben, wobei das Ankerblockmodell eine Rillenscheibe (61) aufweist, auf der das Hinunterziehkabel für' den Strang geschoren ist.

4. Verfahren nach Anspruch 3, wobei das Hinunterziehkabel (22) für den Strang und das Hinunterziekabel (35) für die Leitung von einem Boot auf der Wasseroberfläche betätigt werden, das Ankerblockmodell (19) von einem Boot (15) auf der Wasseroberfläche eingebaut wird und die Schienenstrangeinrichtung (31) über Wasser zusammen befestigt wird.

5. Verfahren nach Anspruch 3 oder Anspruch 4, wobei das Absenken und Befestigen des Ankerblockmodelles (19) folgende Schritte aufweist:

a) Einbauen eines Festpunktpfahles (16),

b) Anordnen des Ankerblockmodells (19), welches eine Vielzahl von Pfahlführungen (60, 62) und die Rillenscheibe (61) aufweist, über welche das Hinunterziehkabel (22) für den Strang geschoren ist, und zwar auf den Festpunktpfahl (16) durch den Gleiteinbau einer Pfahlführung (62) über den Festpunktpfahl (16),

c) Einbau eines Pfahles (26) in jeder der Pfahlführungn (60),

d) Nivellieren des Modelles bzw. der Form (19) und

e) Befestigen der Pfähle (16, 26) an dem Ankerblockmodell (19).

6. Verfahren nach einem der vorhergehenden Ansprüche, wobei das Hinunterziehkabel (22) für den Strang lösbar angebracht ist.

7. Verfahren nach einem der vorhergehenden Ansprüche, wobie die Schienenstrangeinrichtung (31) an dem Unterwasserfestlandkörper (12) mit Strangpfählen (34) unter Verwendung einer Pfahleinbau-Aufstelleinrichtung (40) befestigt ist.

8. Verfahren nach Anspruch 7, wobei das Befestigen der Schienenstrangeinrichtung (31) an dem Unterwasserfestlandköper (12) mit Strangpfählen (34) unter Verwendung einer Pfahleinbau-Aufstelleinrichtung (40) die folgenden Schritte aufweist:

a) Einbau der Pfähle (34), so daß sie sich über eine Reihe von Pfahlseilscheiben (83), die an der Strangeinrichtung (31) angebracht sind, erstrecken;

b) Nivellieren der Strangeinrichtung (31) mit Hebeeinrichtungen, die an der Pfahleinbau-Aufstelleinrichtung (40) angebracht sind, und

c) Befestigen der Pfähle (34) an den Pfahlseilscheiben (63) mit Befestigungsienrichtungen.

9. Verfahren nach einem der vorhergehenden Ansprüche, wobei das Absenken der Schienenstrangeinrichtung (31) auf den Unterwasserfestlandkörper (12) das Unterdrucksetzen oder Fluten der Strangeinrichtung aufweist, um eine richtige Stellung der Strangeinrichtung zu halten.

10. Verfahren nach einem der vorhergehenden Ansprüche, wobei jeder Kaltwasserleitungsabschnitt (50A, 50B usw.) mindestens eine Auflagerschuhstütze (90) hat.

## Revendications

1. Procédé de pose d'une conduite sous-marine (50), réalisée à partir de sections de conduite respectives (50A etc), à l'aide d'un moyen du genre voie ferrée (31), caractérisé par les opérations de:

a) fixation d'un câble de descente de voie (22) à une amorce de voie ferrée (70), laquelle amorce de voie ferrée (70) comporte une poulie (72) sur laquelle est enfilé un câble de descente de conduite (35),

b) fixation rigide de l'amorce de voie ferrée (70) et de sections de voie ferrée successives (34A etc) les unes aux autres pour construire le moyen du genre voie ferrée (31) tout en commandant la descente des sections de voie ferrée (31A etc) au moyen du câble de descente de voie (22), lequel câble s'étend de l'amorce de voie ferrée (70) jusqu'à la surface de l'eau et est mianoeuvré en surface pour commander la descente des sections de voie ferrée,

c) descente du moyen du genre voie ferrée (31) sur une formation de terrain immergée en pente (12),

d) fixation du moyen du genre voie ferrée (31) à la formation de terrain immergée en pente (12),

e) fixation de manière détachable du câble de descente de conduite (35) enfilé sur la poulie à une première section (50A) de la conduite (50), qui est une conduite d'eau froide, et manoeuvre du câble de descente de conduite (35) enfilé sur la poulie à partir de la surface de l'eau sous forme de câble à boucle continue pour amener la première section de conduite d'eau froide (50A) en place sur le moyen du genre voie ferrée (31).

f) fixation de la première section de conduite d'eau froide (50A) au moyen du genre voie ferrée (31) et repositionnement du câble de descente de conduite (35) en vue de sa fixation à une autre section de la conduite d'eau froide (50), et

g) répétition des opérations (e) et (f) effectuée pour charque section de conduite d'eau friode successive jusqu'à ce que toutes les sections de conduite soient en place.

2. Procédé selon la revendication 1, comprenant l'opération d'enfilage de chaque section de voie ferrée (31A) sur le câble de descente de conduite (35) contournant la poulie lors de la fixation l'une à l'autre de l'amorce de voie ferrée (70) et des sections de voie ferrée (31A etc).

3. Procédé selon la revendication 1 ou 2, comprenant une opération initiale de descente et de fixation sur la formation de terrain immergée (12), dans une zone à pente descendante de celle-ci, d'un gabarit d'ancrage (19) qui comporte une poulie (61) contournée par le câble de descente de voie.

4. Procédé selon la revendication 3, dans lequel le câble de descente de voie (22) et le câble de descente de conduite (35) sont commandés à partir d'un bateau situé en surface, le gabarit de corps mort (19) est posé à partir d'un bateau (15) situé en surface, et le moyen du genre voie ferrée (31) est assemblé par fixation opérée au-dessus de l'eau.

5. Procédé selon la revendication 3 ou 4, dans lequel les opérations de descente et de fixation du gabarit de corps mort (19) comprennent les opérations de:

a) pose d'un pieu dormant borne-repère (16),

b) mise en place du gabarit d'ancrage (19) comportant une série de guides-pieux (60, 62) et la poulie (61) sur laquel-le est enfilé le câble de descente de voie (22) par-dessus le pieu formant borne-repère (16) par emboîtement à coulissement d'un guide-pieu (62) par-dessus le pieu formant borne-repère (16).

c) pose d'un pieu (26) dans chacun des guides-pieux (60),

d) mise à niveau du gabarit (19), et

e) fixation des pieux (16, 26) au gabarit (19).

6. Procédé selon l'une quelconque des revendications précédentes, dans lequel le câble de descente de voie (22) est fixé de manière détachable.

7. Procédé selon l'une quelconque des revendications précédentes, dans lequel le moyen du genre voie ferrée (31) est fixé à la formation de terrain immergée (12) par des pieux de voie (34) à l'aide d'un engin de pose de pieux (40).

8. Procédé selon la revendication 7, dans lequel l'opération de fixation du moyen du genre voie ferrée (31) à la formation de terrain immergée (12) par des pieux de voie (34) au moyen d'un engin de pose de pieux (40) comprend les opérations de:

a) pose des pieux (34) pour qu'ils s'étendent à travers une série de poulies de pieu (83) fixées au moyen du genre voie (31);

b) mise à niveau du moyen du genre voie (31) par des vérins fixés à l'engin de pose de pieux (40), et

c) fixation des pieux (34) aux poulies à pieu (83) par des moyens de fixation.

9. Procédé selon l'une quelconque des revendications précédentes, dans lequel l'opération de descente du moyen du genre voie ferrée (31) sur la formation de terrain immergée (12) comprend l'opération de pressurisation ou de remplissage par de l'eau du moyen du genre voie afin que celui-ci maintienne une attitude convenable.

10. Procédé selon l'une quelconque des revendications précédentes, caractérisé en ce que chaque section de conduite d'eau froide (50A, 50B, etc.) comporte au moins une selle de support (90).

## FIG. 1

## FIG. 2

## FIG. 3

0 066 454

FIG. 4

FIG. 5

FIG. 6

2

FIG. 7

FIG. 8

FIG. 9

3

FIG. 10

FIG. 11

FIG. 12

FIG. 13

FIG. 16

FIG. 17

60   60
62
60   60

82   74   82
80A   80B

18
83
80A
74
18
84
83   80B

FIG. 14.

35   74
35   73   70
72
71   22
31A   75   76

FIG. 15

80A   82   74   83
16
35
35
80B   82   81   83
16

0 066 454

FIG. 19    40A

98

82

80

FIG. 20A

93

92    92

40B

FIG. 20B

93

92    92

40B

FIG. 18

83

6

FIG.21

50

22

22

82

FIG.22

90

50

91

83

83

FIG. 23

FIG.24

FIG.25

FIG.26

0 066 454